Europäisches Patentamt

European Patent Office

Office européen des brevets

(19)

(11) Numéro de publication: **0 105 013**

**B1**

(12) **FASCICULE DE BREVET EUROPÉEN**

(45) Date de publication du fascicule du brevet:
**25.01.89**

(21) Numéro de dépôt: **83450012.6**

(22) Date de dépôt: **11.05.83**

(51) Int. Cl.⁴: **A 01 G 25/09**

(54) **Système hydraulique et ses composants.**

(30) Priorité: **12.05.82 US 377512**

(73) Titulaire: **Turion, Jean Claude, 25 Avenue Voltaire, F-34230 Paulhan (FR)**

(43) Date de publication de la demande:
**04.04.84 Bulletin 84/14**

(72) Inventeur: **Turion, Jean Claude, 25 Avenue Voltaire, F-34230 Paulhan (FR)**

(45) Mention de la délivrance du brevet:
**25.01.89 Bulletin 89/4**

(74) Mandataire: **Ravina, Bernard, Cabinet Bernard RAVINA 24, boulevard Riquet, F-31000 Toulouse (FR)**

(84) Etats contractants désignés:
**AT BE CH DE FR GB IT LI LU NL SE**

(56) Documents cité:
**DE-A-2 651 081**
**FR-A-2 312 699**
**FR-A-2 393 527**
**FR-A-2 500 260**
**US-A-3 856 046**

EP 0 105 013 B1

### Description

L'invention décrite en détail dans la présente demande concerne les dispositifs qui sont destinés à être utilisés en relation avec des systèmes d'irrigation et concerne la combinaison de tels dispositifs entre eux et avec de tels systèmes d'irrigation, mais elle a également pour objet les autres applications dans lesquelles un fluide intermittent sous pression est nécessaire, par exemple pour obtenir un mouvement d'oscillation d'un organe.

Dans les systèmes d'irrigation du type à tambour, un grand tambour porte une longueur de tuyau souple qui va jusqu'à un chariot d'aspersion.

A la mise en place du système, le chariot d'aspersion est tiré à partir du tambour pour étendre le tuyau.

Après la mise en pression du tuyau, la buse d'aspersion irrigue le champ pendant que le tambour fait lentement rotation pour rétracter et enrouler le tuyau et tirer le chariot d'aspersion vers le tambour.

Le mécanisme de rotation du tambour comporte un dispositif à chambre expansible, tel qu'un piston ou un soufflet, qui commande un organe oscillant, lequel, lorsqu'il se meut dans un sens fait tourner le tambour et, lorsqu'il se meut dans le sens opposé, est sans effet sur la rotation du tambour.

L'organe oscillant peut être mobile suivant une course linéaire ou en arc de cercle.

Le fluide intermittent sous pression est fourni au dispositif à chambre expansible par un système hydraulique qui comporte un mécanisme d'actionnement et des vannes.

Dans un système de l'art antérieur, un levier excentré est relié à la tige d'une vanne à trois voies qui fournit le fluide directement à un soufflet qui commande un organe relié à celui-ci.

L'expérience a montré que cette disposition de l'art antérieur (voir brevet FR 2.393.527) nécessite un déplacement relativement important du levier d'actionnement et des composants relativement volumineux dans la mesure où la totalité du liquide coulant vers le soufflet (vérin souple) traverse la même vanne qui est mue par le mécanisme d'actionnement.

L'eau employée dans le système d'irrigation contient usuellement une quantité notable d'impuretés et il s'est avéré que ces impuretés ont un effet destructeur sur les éléments constitutifs des vannes, ce qui conduit à des fuites et à un défaut de fiabilité. De même, la force matériel pour mouvoir la vanne d'une position à l'autre est substancielle.

Un but de la présente invention est de fournir un système hydraulique pour distribuer un fluide sous pression de manière intermittente qui soit simple, bon marché en fabrication et plus fiable que les systèmes existants, en particulier quand il est utilisé pour un fluide qui contient des impuretés.

Le système selon la présente invention nécessite moins de puissance et il permet des performances supérieures quand il est associé à un dispositif à haute pression d'eau.

Les composants du système de vanne sont moins susceptibles de fuite, en partie parce que la vanne principale à trois voies ne comporte pas de presse étoupe, et ils sont plus compacts en raison du plus faible volume de liquide qui traverse le distributeur pilote qui est relié aux moyens d'actionnement mécanique.

Le moyen d'actionnement mécanique est supérieur à ceux de l'art antérieur par sa simplicité, l'absence de levier excentré et son aptitude à fonctionner lorsqu'il est actionné suivant un mouvement relativement court.

Le mécanisme d'actionnement peut être à volonté et automatiquement rendu inopérant et lorsqu'il est en fonctionnement, il est doté d'une mémoire qui lui permet de maintenir sa position jusqu'à ce qu'il soit commandé par l'organe de commande.

A cet effet, le système hydraulique pour fournir un fluide sous pression à un dispositif hydraulique selon l'invention comprend:
- une vanne à trois voies comprenant une entrée de fluide et deux sorties, une première sortie pour conduire le fluide au dispositif hydraulique et une deuxième sortie communiquant avec l'air libre, - et se caractérise essentiellement en ce que la vanne à trois voies est divisée par une membrane élastique en deux chambres, une chambre de passage de fluide et une chambre de contrôle de la membrane par un fluide, la dite membrane élastique dans une première position permettant la communication entre la première sortie et la deuxième sortie, c'est-à-dire la communication du dit dispositif avec l'air libre et la fermeture de l'arrivée de fluide, cette fermeture étant assurée par un clapet à bille commandé par la membrane, et dans une deuxième position, sous l'effet d'une pression controlée sur la dite membrane permettant la fermeture de la deuxième sortie et la communication entre l'entrée et la première sortie, c'est-à-dire entre l'entrée et le dit dispositif hydraulique, en ce qu'un distributeur pilote livre du fluide sous pression à la chambre de contrôle de la membrane, le dit distributeur ayant une tige mobile entre deux positions, une première position suivant laquelle la délivrance du fluide à la chambre de contrôle de la membrane est interrompue et une deuxième position suivant laquelle la dite délivrance est autorisée, et en ce que la tige du distributeur pilote est actionnée par un mécanisme comportant un organe de commande, une came oscillante conduite par le dit organe de commande et un galet suiveur de came en contact avec la dite came et relié à la dite tige en sorte que le mouvement de la came y est transmis par le galet de came.

Suivant une autre disposition de l'invention, le système hydraulique pour fournir un fluide sous pression à un dispositif hydraulique se caractérise en ce que la dite membrane a une configuration en soucoupe concavo-convexe et présentant la caractéristique d'élasticité comme un ressort en sorte qu'elle revient d'elle-même à sa première position en l'absence d'une force en sens contraire susceptible de la déformer dans sa seconde position.

Suivant une autre disposition de l'invention, le système hydraulique se caractérise en ce qu'il comprend:

- le mécanisme d'actionnement pour boger la dite tige du distributeur entre la première et la seconde position, le dit mécanisme comportant ledit organe de commande qui est conduit selon un mouvement oscillant rectiligne,

- ladite came oscillante qui est portée pour avoir un mouvement d'oscillation en arc de cercle, la dite came oscillante étant conduite d'avant en arrière par l'organe de commande,

- ledit galet qui collabore avec la came et qui est relié de manière opérationnelle à la dite tige en sorte que le mouvement de la came est transmis par le galet pour déplacer la tige de la première à la deuxième position, et des moyens de friction en contact à friction avec la came, les dits moyens de friction étant destinés à empêcher le mouvement de la came sauf lorsque celle-ci est entrainée par le dit organe de commande.

D'autres avantages et caractéristiques de l'invention apparaîtront à la lecture de la description ci-après d'une forme de réalisation de l'invention donnée à titre d'exemple non limitatif et illustré par les dessins joints dans lesquels:

-la figure 1 est une vue schématique d'un dispositif d'irrigation à tambour avec un tambour à tube d'arrosage, un chariot d'aspersion et un mécanisme de rotation du tambour,

-la figure 2 représente un système hydraulique selon une forme préférentielle de l'invention comportant un mécanisme d'actionnement, un distributeur pilote et une vanne principale,

- La figure 3 représente un autre mode de réalisation du distributeur pilote,

-La figure 4 est une vue en plan représentant les principaux éléments constitutifs du mécanisme d'actionnement du système hydraulique.

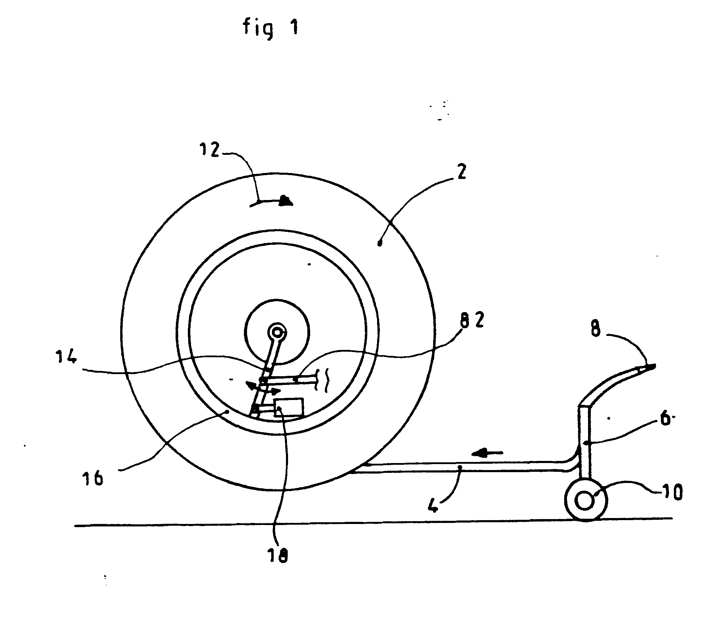

Le système hydraulique selon l'invention pour fournir un fluide sous pression est adaptable et peut être utilisée avec un système d'irrigation à tambour et tuyau souple du type connu représenté à la figure 1.

Ce système comporte un grand tambour rotatif 2 qui porte un long tuyau souple pour l'eau d'irrigation, une partie de ce tuyau étant représentée et référencée par la mention 4.

Le tuyau 4 est connecté à un chariot asperseur 6 qui a une buse d'aspersion 8 et qui est porté mobile par des roues 10.

En fonctionnement, le chariot d'aspersion 6 est d'abord tiré depuis le tambour, entrainant l'extension du tube depuis le tambour et le positionnement du chariot d'asperion 6 à un point de départ relativement éloigné du tambour 2.

L'alimentation en eau est ouverte en sorte que la buse d'aspersion commence à irriguer le champ.

Pendant cette opération d'irrigation, le tambour est entrainé en rotation suivant la flèche 12 pour enrouler à nouveau le tuyau 4 sur le tambour 2 et il entraine le chariot d'aspersion à travers le champ.

Le mécanisme pour faire tourner le tambour comporte un bras oscillant 14 qui se déplace suivant un angle réduit. L'extrémité extérieure du bras 14 reliée de manière fonctionnelle à une transmission, chaîne ou autre, qui entraine le tambour 2 en rotation.

Le mouvement d'oscillation du bras est produit par un piston hydraulique à simple action 18 qui agit en sens opposé à un ressort de rappel.

Le piston 18 est seulement un type de dispositif adaptable à chambre expansible parmi d'autres tels que pistons à double action, soufflets, vérins, etc...

Le piston 18 est mû par l'eau ou par tout autre fluide hydraulique et il communique le mouvement d'oscillation au bras 14, ce qui entraine le tambour et tire le tuyau 4 et le chariot 6 vers le tambour pendant l'aspersion.

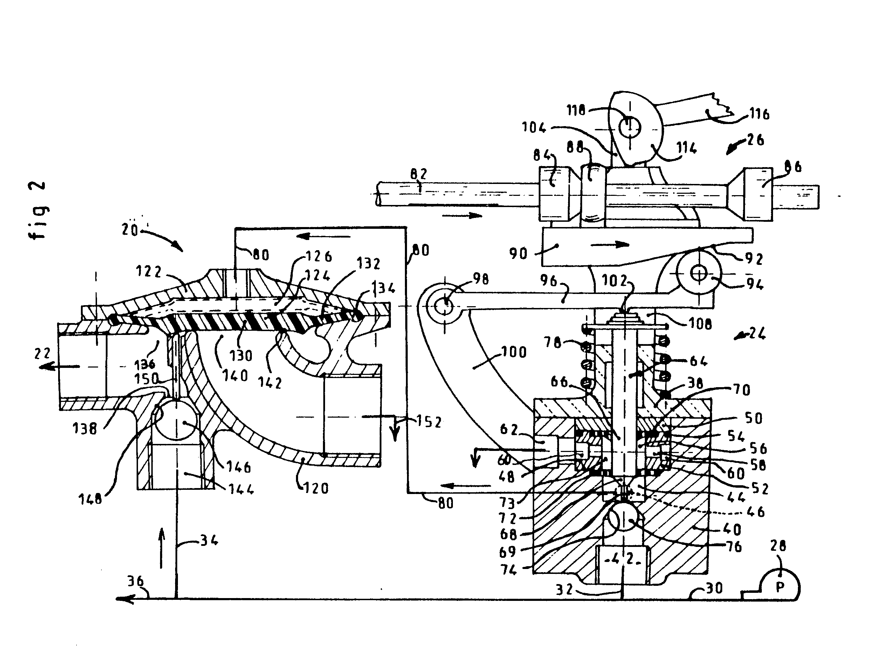

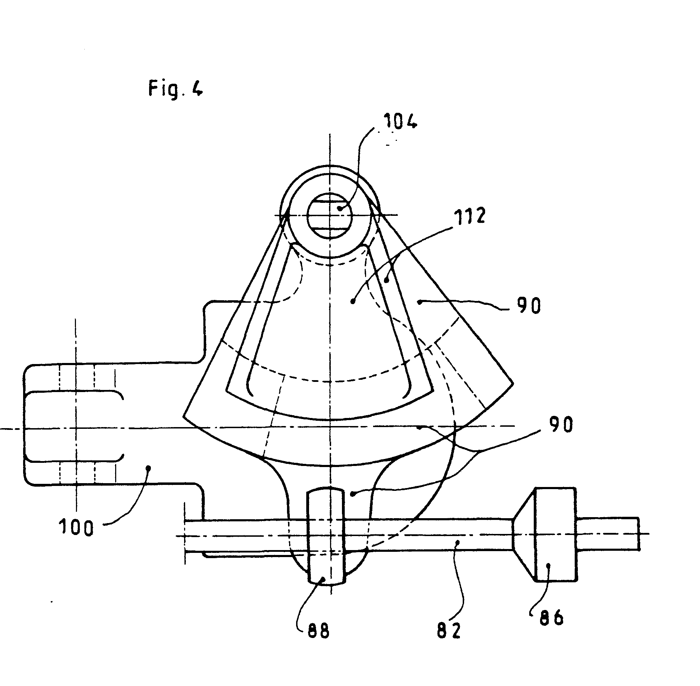

Le bras 14 est relié de manière fonctionnelle à une tringle 82 de commande de came et transmet un mouvement alternatif à la dite tringle qui est également reliée de manière fonctionnelle à une came 90 représentée en figures 2, 3 et 4.

Un système hydraulique préférentiel est représenté en figure 2. Il comprend une vanne à trois voies 20 avec une sortie 22 qui fournit une pression hydraulique au piston 18, un distributeur pilote 24 qui donne une pression contrôlée à la vanne principale 20, et un mécanisme d'actionnement 26 qui actionne le distributeur.

Une pompe d'irrigation 28 fournit de l'eau sous pression à un conduit principal 30 relié par les embranchements 32, 34 et 36 au distributeur 24, à la vanne 20 et au tuyau 4.

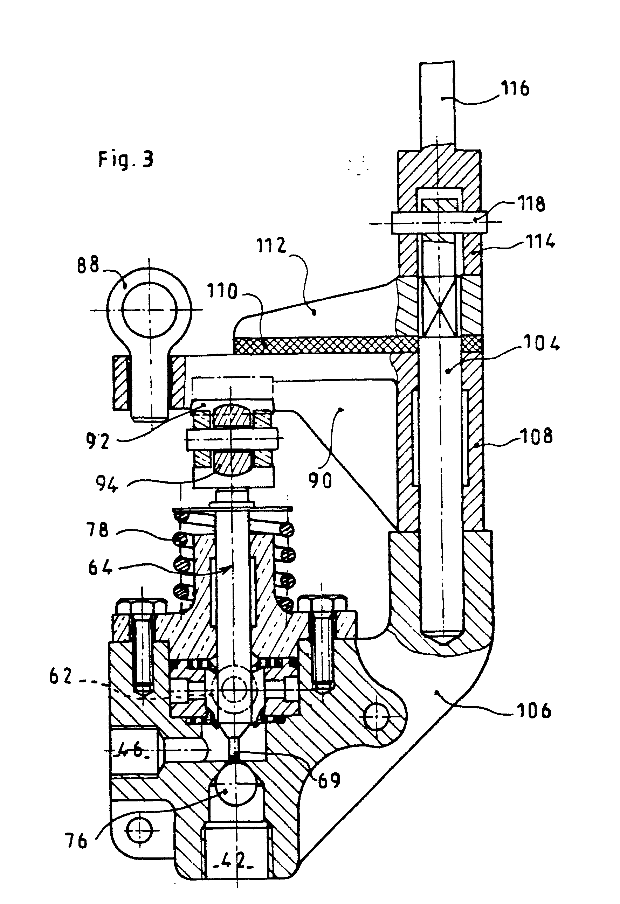

Le distributeur pilote 24 est constituée d'un couvercle 38 et d'un corps principal 40 qui est doté d'un conduit d'entrée 42, d'une chambre principale 44 recevant le liquide depuis le conduit d'entrée 42 et d'une ouverture de sortie (figure 3) pour conduire le fluide sous pression du distributeur 24 à la vanne principale 20.

Au-dessus de la chambre principale 44 est réalisé un lamage 48 qui reçoit deux inserts 50 et 52.

L'insert supérieur 50 appuie contre une pièce de blocage 54 pour retenir et bloquer l'insert inférieur 52 en position.

L'insert inférieur 52 est doté d'un perçage central 56 et de conduits radiaux 58 qui conduisent à un canal périphérique 60 en communication avec un conduit d'écoulement à l'extérieur 62.

Le distributeur pilote 24 est doté d'une tige 64 qui est représentée dans la position qu'elle occupe pendant sa course vers le bas.

La tige comporte un fût cylindrique 66, une section de transition 68 tronconique et un pointeau 69.

Le fût cylindrique s'étend entre une paire de rondelles d'étanchéïté espacées 70 et 72 qui définissent entre elles en combinaison avec l'insert inférieur une chambre d'évacuation 73. Immédiatement sous la chambre principale 44 est réalisé un conduit d'entrée avec un siège conique 74.

Une sphère 76 dans le conduit 42 peut se bloquer en obturation contre le siège 74 pour empêcher le liquide de pénétrer dans la chambre principale 44.

La tige 64 est normalement précontrainte par un ressort 78 vers une position supérieure dans laquelle la surface cylindrique du fût 66 n'est pas en contact avec la rondelle inférieure d'étanchéïté 72, ce qui permet la communication entre la chambre d'évacuation 73 et la chambre principale 44.

Un mouvement vers le bas de la tige 64 comprime le ressort 78 et fait venir la surface cylindrique de la tige en contact d'obturation avec la rondelle 72 en sorte d'interrompre la communication entre les chambres 44 et 73 comme représenté en figure 2. Un déplacement supplémentaire vers le bas de la tige provoque le déplacement vers le bas de la sphère par le pointeau, en l'écartant du siège 74 en sorte que l'eau du conduit d'entrée 42 coulera dans la chambre principale 44 et par l'ouverture de sortie 46 dans un conduit 80.

Le mouvement suivant vers le haut de la tige 64 écarte le pointeau 69 de la sphère 76 qui revient à sa position d'obturation contre le siège 74 de l'entrée. Un autre mouvement vers le haut, succédant au précédent, de la tige 64 forme la communication entre les chambres 44 et 72, en sorte que la pression dans la conduite de contrôle de fluide 80 et la chambre principale 44 sera mise à l'air libre à travers la chambre 73 et le conduit 62.

Le distributeur pilote quand il est employé avec un appareil d'irrigation à tambour tel que représenté à la fig. 1, est actionné en réponse au mouvement du bras 14.

Si l'on fait retour à la figure 1, on voit qu'il y a une tringle 82 de commande du distributeur reliée de manière pivotante au bras 14.

Cette tringle (fig. 2) comporte une paire de bagues écartées 84 et 86 qui sont fixées sur un même axe longitudinal par vis ou autre.

La tringle passe à travers un anneau 88 qui est fixé avec articulation à une came oscillante 90.

Quand la tringle effectue son cycle complet de mouvement, les organes, ou bagues, 84 et 86 par coopération avec l'anneau 88 font effectuer un mouvement d'arrière en avant (et inversement) à la came.

Une surface de came 92 sur le côté inférieur de la came 90 coopère avec un galet 94.

Le galet est fixé de manière rotative à l'extrémité extérieure libre d'un bras de levier 96 dont l'extrémité opposée est montée avec articulation en 98 à une crosse 100 fixe du corps principal de la soupape.

Un bossage 102 du côté inférieur du bras 96 appuie contre l'extrémité supérieure de la tige 64.

De ce fait quand la surface de la came 92 (inclinée) fait bouger vers le bas le galet 94 pour faire pivoter le bras de levier, le bossage 102 fait bouger la tige de sa position supérieure à sa position inférieure, ce qui déplace le distributeur pilote d'un état, dans lequel les deux sorties 46 et 62 sont interconnectées, à un état, dans leqeul l'entrée 42 est connectée à la sortie 46.

Bien que le mouvement de la came 90 puisse être un mouvement d'oscillation rectiligne, il est préférable qu'il soit suivant une oscillation en arc de cercle.

Cela permet d'utiliser des moyens supports simples comme représenté à la fig. 3.

Ce support comporte un fût dirigé vers le haut 104 fixé de manière non rotative à une excroissance 106 du corps du distributeur. La came 90 a une portion 108 formant coussinet qui chevauche le fût 104 et fait rotation par rapport à celui-ci selon que la came est guidée d'avant en arrière par la tringle 82.

Pour éviter le déplacement de la came 90, sauf quand elle est actionnée par l'organe de commande 82, la came coopère à friction avec un organe à friction, spécialement une garniture 110 sur la surface inférieure d'un patin 112.

Le patin 112 est relié de manière non rotative à l'arbre 104 en sorte que la came 90 se déplace relativement à la garniture 110 du patin 112.

L'effet de cette disposition de moyen est que la came est ainsi dotée d'une mémoire dans le sens où elle va toujours rester à la dernière position qui lui est donnée par la tringle de commande 82, ce qui prévient tout mouvement intempestif du distributeur pilote d'une position à l'autre.

Pour débrayer le mécanisme d'actionnement du distributeur, la came 90 peut être dégagée en sorte qu'elle puisse se déplacer vers le haut dans une direction qui est sensiblement parallèle au mouvement du galet suiveur 94.

Ce dégagement peut être effectué en permettant au patin 112 d'être librement mobile vers le haut en sorte que le coussinet 108 de la came puisse également bouger vers le haut pendant son mouvement de rotation sur le fût.

Dans des conditions de fonctionnement normales, la came 90 est tenue selon une position axialement fixe sur le fût 104 par le patin 112 qui est maintenu vers le bas par une came à excentrique 114.

La came 114 est dotée d'un manche 116 et est reliée de manière pivotante à l'extrémité supérieure du fût 104 par un axe 118.

Le système d'irrigation peut être doté d'un dispositif (système à triangle)) non représenté qui automatiquement ordonnera au manche 116 de tourner l'excentrique 114 dans une position où il n'est plus en appui sur le patin.

Cela permet au patin de bouger vers le haut et également permet à la came de bouger vers le haut en sorte que le mouvement de la tringle 82 n'est pas transmis par la came 90 au galet 94 et à la tige 64.

L'ensemble du système de vanne et du mécanisme d'entraînement en rotation du tambour est ainsi débrayé.

Un tel mécanisme de débrayage automatique peut être utilisé pour débrayer le mécanisme de rotation du tambour, quant par exemple le chariot d'aspersion 6 a été tiré en arrière jusqu'à une position adjacente au tambour.

Comme mentionné plus haut, la vanne 20 est utilisée pour fournir le fluide d'actionnement à un dispositif à chambre expansible 18 dans un appareil d'irrigation.

L'ouverture et la fermeture de cette vanne se situe en réponse à une pression contrôlée venant du distributeur 24.

Comme représenté en fig. 2, le boitier de la vanne 20 comporte un corps principal 120 et un couvercle 122.

Une membrane 124 sépare l'intérieur du boitier entre une chambre de contrôle de la membrane par un fluide 126 et une chambre inférieure de passage du fluide 136.

La chambre de contrôle de la membrane 126 est reliée à la conduite 80 de contrôle de fluide de la soupape pilote 24 en sorte de recevoir une pression contrôlée de celle-ci.

La membrane 124 est représentée dans sa seconde position mentionnée plus haut ou position de travail, cette position étant prise quand la chambre de contrôle de la membrane par un fluide 126 est alimentée en fluide par la conduite 80.

La position première, ou position de repos, de la membrane est représentée en traits discontinus.

La vanne a un conduit d'entrée 144 qui reçoit l'eau de la pompe principale 28 du système d'irrigation, un premier conduit de sortie 22 qui délivre l'eau au dispositif à la chambre expansible et un second conduit de sortie 152 qui permet à l'eau de s'échapper depuis le dispositif à chambre expansible vers une évacuation à l'air libre.

La membrane 124 comporte une portion centrale circulaire 130 relativement épaisse, une portion annulaire 132 moins épaisse qui entoure et est reliée à la portion centrale et un bourrelet circulaire 134 qui est logé dans une gorge circulaire du boitier. La membrane a la forme d'une soucoupe concave-convexe et présente la caractéristique d'un ressort en ce qu'elle reprend simultanément sa premiere position en l'absence d'une force suffisante opposée pour la déformer dans sa seconde position.

Quand la membrane est dans sa première position représentée en traits discontinus, la chambre inférieure 136 de passage du fluide a une entrée 138, une sortie 22 qui conduit au cylindre 18 de rotation du tambour et une seconde sortie 140 qui est entourée par un siège circulaire 142.

Un conduit d'entrée 144 mène à l'entrée 138, il comporte une sphère 146 logée à proximité d'un siège d'entrée conique 148. La sphère 146 vient en blocage contre le siège 148 sous l'action de la pression du fluide dans le conduit 144.

Directement au-dessus et centré sur la sphère est disposé un pointeau mobile 150 dont l'extrémité vient en contact de la surface inférieure de la membrane 124.

La longueur du pointeau est telle que lorsque la membrane est dans sa position supérieure, le pointeau n'impose aucune force vers le bas à la sphère 146 excepté sous l'effet de son propre poids.

Cependant, quant la membrane est en position inférieure, le pointeau 150 transmet le mouvement de la membrane à la sphère 146 en l'écartant du siège 148 et en permettant au fluide sous pression de couler depuis le conduit d'entrée 144 vers l'entrée 138 de la chambre 136. Au même moment, la membrane 124 vient au contact en obturation du siège 142 de sorte qu'aucune pression ne puisse être perdue à travers l'orifice d'évacuation 140.

La membrane est déplacée de sa position supérieure à sa position inférieure par la pression de la conduite 80.

Comme expliqué avant, cela se produit quand la tringle de commande 82 actionne le mécanisme 26 et fait bouger la tige 64 de la soupape pilote de sa position inférieure.

Quand la tringle 82 bouge la came 90 en sorte que la tige 64 du distributeur pilote revienne à sa position supérieure, la pression dans la conduite 80 est supprimée à travers l'orifice d'évacuation 62.

A ce moment, la pression dans la chambre inférieure de passage du fluide 136 de la soupape 20 agira vers le haut à l'encontre de la membrane et se conjugue avec la prédisposition de la caractéristique élastique de la membrane pour la ramener à la position représentée en traits discontinus.

Cela permet au pointeau 150 de faire mouvement vers le haut et la sphère 146 vient se bloquer en obturation contre le siège 148 pour interrompre l'écoulement de fluide sous pression du conduit d'entrée 144 à l'entrée 138.

Le mouvement vers le haut de la membrane écarte également celle-ci du siège 142 qui entoure la sortie d'évacuation 140, en sorte que la pression du fluide puisse s'évacuer à l'air libre par le conduit de sortie 152.

L'invention peut recevoir des aménagements et des variantes non complètement décrit dans la présente description mais dans l'application de fluide sous pression intermittent dans le cadre des revendications ci-après.

**Revendications**

1. Système hydraulique pour fournir un fluide sous pression à un dispositif hydraulique (18), le dit système comprenant une vanne à trois voies comprenant une entrée de fluide (136) et deux sorties, une première sortie (22) pour conduire le fluide au dispositif hydraulique et une deuxième sortie (140) communiquant avec l'air libre, caractérisé en ce que la vanne à trois voies est divisée par une membrane élastique (124) en deux chambres, une chambre (136) de passage de fluide et une chambre (126) de contrôle de la membrane par un fluide, la dite membrane élastique dans une première position permettant la communication entre la première sortie (22) et la deuxième sortie (140), c'est-à-dire la communication du dit dispositif avec l'air libre et la fermeture de l'arrivée de fluide, cette fermeture étant assurée par un clapet à bille (146) commandé par la membrane, et dans une deuxième position, sous l'effet d'une pression controlée sur la dite membrane, permettant la fermeture de la deuxième sortie (140) et la communication entre l'entrée (138) et la première sortie (22), c'est-à-dire entre l'entrée (138) et le dit dispositif hydraulique (18), en ce qu'un distributeur pilote (24) livre du fluide sous pression à la chambre (126) de contrôle de la membrane, le dit distributeur ayant une tige (64) mobile entre deux positions, une première position suivant laquelle la délivrance du fluide à la chambre de contrôle de la membrane est interrompue et une deuxième position suivant laquelle la dite délivrance est autorisée, et en ce que la tige (64) du distributeur pilote est actionnée par un mécanisme (26) comportant un organe de commande (82), une came oscillante (90) conduite par le dit organe de commande et un galet suiveur de came (94) en contact avec la dite came et relié à la dite tige (64) en sorte que le mouvement de la came y est transmis par le galet de came.

2. Système hydraulique pour fournir un fluide sous pression à un dispositif hydraulique selon la revendication 1 caractérisé en ce que la dite membrane a une configuration en soucoupe concavo-convexe et présentant la caractéristique d'élasticité comme un ressort en sorte que la membrane revient d'elle- même à sa première position en l'absence d'une force en sens contraire susceptible de la déformer dans sa seconde position.

3. Système hydraulique pour fournir un fluide sous pression à un dispositif hydraulique comprenant une vanne selon la revendication 1 caractérisé en ce que la dite vanne a un conduit d'entrée de fluide qui mène de la dite entrée (138) à la chambre de passage de fluide (136), le dit conduit d'entrée de fluide étant muni dudit clapet à bille comprenant un siège d'entrée (148) et un pointeau (150) qui est mobile en contact d'obturation avec le dit siège en réponse à la pression dans le dit conduit d'entrée de fluide, en ce que ce pointeau (150) est mobile d'une position rétractée à une position en extention où il appuie contre une sphère (146) d'obturation pour l'écarter du siège d'entrée, ce qui permet au fluide de couler du conduit d'entrée de fluide dans la dite chambre de passage de fluide, le dit pointeau étant mobile de sa position rétractée à sa position en extention en réponse au mouvement de la membrane de sa première position à sa seconde position.

4. Système hydraulique selon la revendication 1 caractérisée en ce que, dans le mécanisme d'actionnement du distributeur pilote comportant l'organe de commande, la came oscillante (90) qui est commandée d'avant en arrière par le dit organe de commande et le galet de came (94) venant contre la dite came, le dit galet de came (94) est relié à la dite tige (64) du distributeur (24) en sorte que le mouvement de la came est transmis par le galet pour bouger la tige entre sa première et sa seconde position.

5. Système hydraulique selon la revendication 1 caractérisé en ce qu'il comprend:
- le mécanisme d'actionnement (26) pour bouger la dite tige (64) entre la première et la seconde position, le dit mécanisme comportant ledit organe de commande (82) qui est conduit selon un mouvement oscillant rectiligne,
- la dite came oscillante (90) qui est portée pour avoir un mouvement d'oscillation en arc de cercle, la dite came oscillante étant conduite d'avant en arrière par l'organe de commande,
- ledit galet (94) collaborant avec la came et qui est relié de manière opérationnelle à la dite tige en sorte que le mouvement de la came est transmis par le galet pour déplacer la tige de la première à la deuxième position, et des moyens de friction (110) en contact à friction avec la came, les dits moyens de friction étant destinés à empêcher le mouvement de la came sauf lorsque celle-ci est entrainée par le dit organe de commande.

6. Un système hydraulique selon la revendication 5 caractérisé en ce qu'il comprend un arbre qui supporte de manière pivotante la dite came oscillante (90) pour un mouvement d'oscillation en arc de cercle, les moyens de friction comportant un patin (112) qui est porté par le dit arbre et qui n'est pas mobile en pivotement par rapport au dit arbre.

7. Un système hydraulique selon la revendication 6 comportant un moyen de débrayage à came excentrique (114) pour libérer le patin (112) selon un mouvement axial le long de l'arbre (104), la dite came oscillante (90) étant axialement mobile le long du dit arbre quand le patin est débrayé en sorte que le mouvement de la came oscillante (90) actionnée par l'organe de commande (82) ne sera pas transmis au distribution pilote.

8. Système hydraulique selon les revendications 4 et 5 incluant des moyens de débrayage de la came pour débrayer la came (90) et permettre son mouvement dans une direction sensiblement parallèle au mouvement du galet (94), le mouvement de la came par l'organe de commande (82) n'entraînant alors pas de mouvement du galet et de la tige du distributeur, ce qui met hors service le système hydraulique.

9. Système hydraulique selon la revendication 8 comportant un moyen de friction (112) qui coopère en friction avec la came, le dit moyen de friction agissant pour empêcher le mouvement de la came sauf dans le cas où celle-ci est actionnée par l'organe de commande (82).

## Patentansprüche

1. Hydraulisches System zur Einspeisung einer Flüssigkeit unter Druck in eine hydraulische Anlage (18), wobei dieses System aus einem Dreiweg-Ventil besteht, das aus einem Flüssigkeitseinlaß (136) und zwei Ausgängen besteht, einem ersten Ausgang (22), um die Flüssigkeit zur hydraulischen Anlage zu leiten, und einem zweiten Ausgang (140) ins Leere, dadurch gekennzeichnet, daß das Dreiwege-Ventil von einer elastischen Membran (124) in zwei Kammern aufgeteilt wird, eine Kammer (136), durch die die Flüssigkeit durchfließt, und eine Kammer (126), in der die Membran von einer Flüssigkeit kontrolliert wird, wobei diese elastische Membran, wenn sie sich in Position 1 befindet, den Durchfluß zwischen dem ersten Ausgang (22) und dem zweiten Ausgang (140) zuläßt, d. h. , die Öffnung der genannten Anlage ins Leere und die Schließung des Flüssigkeitseinlasses, wobei diese Schließung von einem Kugelventil (146), das von der Membran gesteuert wird, durchgeführt wird, und in Position 2, durch kontrollierten Druck auf die genannte Membran, die Schließung des zweiten Ausgangs (140) und den Durchfluß zwischen dem Einlaß (138) und dem ersten Ausgang (22), d. h., zwischen dem Einlaß (138) und der genannten hydraulischen Anlage (18), dadurch, daß ein Steuerverteiler (24) unter Druck Flüssigkeit in die Membran-Kontrollkammer leitet. Dieser Steuerverteiler besitzt einen Stift (64), der zwischen zwei Positionen beweglich ist, einer ersten Position in der die Flüssigkeitsabgabe an die Kontrollkammer der Membran unterbrochen ist, und eine zweite Position, in der diese Abgabe stattfindet. Der Stift (64) des Steuerverteilers wird von einem Mechanismus (26) bewegt, der aus einem Steuerorgan (82), einer vom genannten Steuerorgan gesteuerten Nocke (90) und einer Rolle (94), die auf der Nocke sitzt, ihrer Bewegung folgt, und mit dem genannten Stift (64) verbunden ist, so daß die Bewegungen der Nocke über die Nockenrolle auf ihn übertragen werden.

2. Hydraulisches System zur Einspeisung einer Flüssigkeit unter Druck in eine hydraulische Anlage gemäß Anspruch 1, dadurch gekennzeichnet, daß die genannte Membran eine konvex- konkave Form hat und aufgrund ihrer Elastizität (wie eine Feder) von selbst wieder ihre erste Position einnimmt, wenn keine Kraft in Gegenrichtung vorhanden ist, die sie in die zweite Position zwingt.

3. Hydraulisches System zur Einspeisung einer Flüssigkeit unter Druck in eine hydraulische Anlage, die ein Ventil gemäß Anspruch 1 umfaßt, das dadurch gekennzeichnet ist, daß das genannte Ventil eine Einlaßleitung besitzt, die zu dem genannten Einlaß (138) in der Flüssigkeits-Durchlaufkammer (136) führt. Die genannte Einlaßleitung ist mit einem Kugelventil ausgestattet, das einen Einlaßsitz (148) und eine bewegliche Nadel (150) umfaßt, die sich, in Abhängigkeit vom Druck in der genannten Einlaßleitung, in Verschluß-Kontakt mit dem Sitz befindet. Diese Nadel (150) ist beweglich aus einer zurückgezogenen Position in eine vorgeschobene Position, in der sie gegen eine Verschluß-Kugel (146) drückt, um sie vom Einlaßsitz zu entfernen, wodurch die Flüssigkeit von der Einlaßleitung in die genannte Durchlaufkammer fließen kann, wobei die genannte bewegliche Nadel aus der zurückgezogenen in die vorgeschobenen Position bewegt wird, wenn sich die Membran sich aus ihrer ersten in ihre zweite Position bewegt.

4. Hydraulisches System gemäß Anspruch 1, dadurch gekennzeichnet, daß sich in dem Bewegungsmechanismus des Steuerverteilers, der das Steuerorgan, die Nocke, die von dem genannten Steuerorgan von vorne nach hinten bewegt wird, und die Nockenrolle (94), die sich in Kontakt mit der genannten Nocke befindet, umfaßt. Die genannte Nockenrolle (94) ist mit dem genannten Stift (64) des Verteilers (24) so verbunden, daß die Bewegung der Nocke über die Rolle auf den Stift übertragen wird und ihn in Position 1 oder 2 bringt.

5. Hydraulisches System gemäß Anspruch 1, dadurch gekennzeichnet, daß es folgende Teile umfaßt:
- den Bewegungsmechanismus (26), um den genannten Stift (64) in die erste oder zweite Position zu bringen, wobei der genannte Mechanismus das genannte Steuerorgan (82) umfaßt, das gradlinig hin und her geführt wird,
- die genannte Nocke (90), die sich auf einem Kreisbogen hin und her bewegt, wobei die genannte Nocke von dem Steuerorgan von vorne nach hinten bewegt wird,
- die genannte Rolle (94), die mit der Nocke zusammen arbeitet, und die mit dem genannten Stift so verbunden ist, daß die Bewegungen der Nocke über die Rolle auf den Stift übertragen werden und diesen in die erste oder zweite Position bringen; außerdem verhindert ein Hemmechanismus (110), der sich mit der Nocke in Reibungskontakt befindet, alle Bewegungen der Nocke, die nicht von dem genannten Steuerorgan ausgehen.

6. Hydraulisches System gemäß Anspruch 5, dadurch gekennzeichnet, daß es eine Achse besitzt, auf dem die genannte Nocke (90) drehbar sitzt, so daß sie sich auf einem Kreisbogen hin und her bewegen kann. Der Hemmechanismus umfaßt einen Schuh (112), der auf der genannten Achse sitzt und der nicht um diese Achse drehbar ist.

7. Hydraulisches System gemäß Anspruch 6, das eine exzentrische Kupplungs-Nocke (114) besitzt, die den Schuh (112), gemäß einer Bewegung entlang der Achse (104), freigibt, da die genannte Nocke (90) auf der genannten Achse beweglich ist, wenn der Schuh ausgekuppelt ist, so daß die von dem Steuerorgan (82) ausgehende Bewegung der Nocke (90) nicht auf den Steuerverteiler übertragen wird.

8. Hydraulisches System gemäß Anspruch 4 und 5, das einen Kupplungsmechanismus umfaßt, um die Nocke (90) auszukuppeln und es zu erlauben, daß sie sich in einer Richtung bewegt, die zur Bewegungsrichtung der Rolle (94) weitgehend parallel liegt, wobei die Bewegung der Nocke durch das Steuerorgan (82) dann keine Bewegung der Rolle und des Stiftes des Verteilers nach sich zieht und das hydraulische System so außer Betrieb gesetzt wird.

9. Hydraulisches System gemäß Anspruch 8, das einen Hemmechanismus (112) besitzt, der an der Nocke sitzt und deren Bewegung verhindert, wenn diese nicht von dem Steuerorgan (82) ausgeht.

**Claims**

1. Hydraulic system to supply fluid under pressure for a hydraulic device (18), the said system comprising a three-way valve comprising a fluid inlet (136) and two outlets, one outlet (22) for conveying the fluid to the hydraulic device and the second outlet (140) leading to the open air, characterized by the fact that the three-way valve is divided by an elastic membrane (124) into two chambers, one chamber (136) through which fluid flows and another chamber (126) controlling the membrane via a fluid, the said elastic membrane's first position linking up the first outlet (22) and the second outlet (140), i.e. linking the said device with the open air and shutting off the fluid supply, this shut off being achieved by a ball valve (146) controlled by the membrane, and its second position, under controlled pressure on the said membrane, shutting off the second outlet (140) and the link between the inlet (138) and the first outlet (22), i.e. between the inlet (138) and the said hydraulic device (18), in that a control distributor pumps fluid under pressure into the membrane control chamber (126), the said distributor possessing a mobile two-position shaft, a first position that the supply of fluid to the membrane control chamber is cut off and a second position allowing fluid to pass, and in that the control distributor rod (64) is driven by a mechanism (26) comprising a drive device (82), an oscillating cam (90) driven by the said drive device and a cam follower (94) in contact with the said cam and connected to the said rod (64) so that the movement of the cam is transmitted by the cam follower.

2. Hydraulic system to supply fluid under pressure to a hydraulic device as in claim 1 characterized by the fact that the said membrane is concave-convex shaped and elastic like a spring so that the membrane returns automatically to its first position unless an opposite force likely to push it into its second position is exerted.

3. Hydraulic system to supply fluid under pressure to a hydraulic device comprising a valve as in claim 1 characterized by the fact that the said valve has a fluid inlet pipe leading from the said inlet (138) to the chamber through which fluid passes (136), the said fluid inlet pipe being equipped with the aforesaid ball valve comprising a seat on the inlet side (148) and a needle (150) which is mobile and which comes to rest against the said seat, thus sealing it off, under pressure from the said fluid inlet pipe, in that the needle (150) moves from a retracted position to an extended position where it pushes a ball (146) off the seat, thus allowing fluid to flow from the fluid inlet pipe into the said fluid chamber, the said needle moving from its retracted position to its extended position owing to the membrane moving from its first to its second position.

4. Hydraulic system as in claim 1 characterized by the fact that in the control distributor drive mechanism including the drive device, the oscillating cam (90) which is driven back and forward by the said drive device and the cam follower (94) in contact with the said cam, the said cam follower (94) is connected to the said rod (64) of the distributor (24) so that the movement of the cam is transmitted by the follower in order to move the shaft from its first to its second position.

5. Hydraulic system as in claim 1 characterized by the fact that it comprises:
- the drive mechanism (26) that moves the said rod (64) from its first to its second position, including the said drive device (82) which is driven by a rectilinear oscillating movement,
- the said oscillating cam (90) which moves in an oscillating circular motion, the said oscillating cam being driven back and forward by the drive device,
- the said cam follower (94) working with the cam which is linked operationally to the said rod so that the movement of the cam is transmitted by the cam follower and moves the rod from its first to its second position, and friction devices (110) in contact with the cam, the said friction devices designed to prevent the cam from moving unless it is driven by the said drive device.

6. Hydraulic system as in claim 5 characterized by the fact that it comprises a shaft on which the said oscillating cam (90) pivots, thus creating a circular movement, the friction devices comprising a pad (112) which is fixed to the said shaft and which does not pivot in relation to the said shaft.

7. Hydraulic system as in claim 6 comprising an excentric cam disengagement device (114) to release the pad (112) via an axial movement along the shaft (104), the said oscillating cam (90) being axially mobile along the shaft when the pad is disengaged so that the movement of the oscillating cam (90) driven by the drive device (82) will not be transmitted to the control distributor.

8. Hydraulic system as in claims 4 and 5 including cam disengagement mechanisms to disengage the cam (90) so that it may move in a direction virtually parallel to the movement of the cam follower (94), which means that the movement of the cam by the drive device does not drive the follower and the distributor shaft, which shuts off the hydraulic system.

9. Hydraulic system as in claim 8 comprising a friction device (112) that rests against the cam, the said friction device preventing the cam from moving unless it is driven by the drive device (82).

fig 1

fig 2

Fig. 3

Fig. 4